# EUROPÄISCHE PATENTANMELDUNG

(11) **EP 0 562 353 A2**
(43) Veröffentlichungstag der Anmeldung: **29.09.1993**
(21) Anmeldenummer: 93103759.2
(22) Anmeldetag: 09.03.1993
(51) Int. Cl.: H04L 12/56

(54) **Verfahren zum Übertragen hochpriorer Programme und Daten in einem Kommunikationssystem**

(30) Priorität: 27.03.1992 DE 4210138
(71) Anmelder: SIEMENS AKTIENGESELLSCHAFT, D-80333 München (DE)
(72) Erfinder: Strahl, Karl, Dipl.-Ing., W-7959 Gutenzell (DE); Ludwig, Josef, W-8939 Jengen/Weicht (DE)

(57) **Zusammenfassung**

Beim Ausfall peripherer Einrichtungen eines Kommunikationssystems müssen umgehend Prozesse der Sicherungstechnik zur Fehleranalyse/Fehlerlokalisierung gestartet werden. Dies birgt insbesondere in Zeiten hohen vermittlungstechnischen Verkehrs - also in Zeiten, in denen die Kapazitäten und Übertragungswege im Kommunikationssystem bis zur Kapazitätsgrenze belastet sind - die Gefahr in sich, daß aufgrund ihrer höheren Priorisierung, die Prozesse der Sicherungstechnik die Prozesse der Vermittlungstechnik in ihrem zeitlichen Ablauf verschieben. In der Praxis würde dies bedeuten, daß neue Verbindungswünsche zum Teil nicht aufgebaut werden können. Das erfindungsgmäße Verfahren schafft hier Abhilfe, indem dafür Sorge getragen wird, daß auch in Zeiten hohen vermittlungstechnischen Verkehrs die Prozesse der Sicherungstechnik die ausgefallenen peripheren Einheiten versorgen können, ohne dabei in den zeitlichen Ablauf der vermittlungstechnischen Prozesse eingreifen zu müssen.

## Beschreibung

Die Erfindung betrifft ein Verfahren gemäß Oberbegriff des Patentanspruchs 1.

Komplexe Kommunikationssysteme sind meist als Multiprozessorsysteme realisiert. Sie besitzen gegenüber herkömmlichen Monoprozessorsystemen Vorteile, wie z.B. eine drastische Erhöhung der Verarbeitungsgeschwindigkeit. Dies wird durch eine parallele Bearbeitung mehrerer Aufgaben erreicht, die jeweils Teilaufgaben einer übergeordneten Aufgabe darstellen; jeder Prozessor arbeitet an einer Teilaufgabe und die daraus resultierenden Teilergebnisse werden wieder zu einem Gesamtergebnis zusammengesetzt. Um den damit verbundenen Anforderungen gerecht zu werden, müssen systeminterne Abläufe von einer Vielzahl von Prozessen gesteuert und überwacht werden. Damit erhöht sich die Komplexität der in einem Kommunikationssystem ablaufenden und Prozesse drastisch. Somit ist ein komplexes Zusammenspiel von Softwareprozessen nötig. Um Ordnung in ein solch komplexes Zusammenspiel von Prozessen zu bringen, werden den einzelnen Prozessen sogenannte Prioritätsstufen zugeordnet. Dies bedeutet, daß nur jeweils ein solcher Prozeß ablaufen darf, der momentan die höchste Prioritätsstufe besitzt. Prozesse niedrigerer Prioritätsstufe werden solange in ihrem Ablauf gehindert, bis die Prozesse höherer Prioritätsstufen abgelaufen sind.

Die Software eines Kommunikationssystems besteht aus aufgabenbezogenen modular strukturierten Softwareprozessen. Diese sind in Prozesse der Vermittlungstechnik, Sicherheitstechnik sowie der Betriebstechnik aufgeteilt.

Dabei werden die Prozesse jeweiligen Prozessoren zugeteilt, die die Abarbeitung übernehmen.

Die Prozesse der Vermittlungstechnik sowie der Sicherungstechnik besitzen generell hohe Prioritätsstufen. Die Prozesse der Sicherungstechnik sollen ablaufen, wenn Einheiten des Kommunikationssystems ausgefallen sind. In diesem Fall müssen unverzüglich Maßnahmen zum Beseitigen aufgetretener Fehler und zum Wiederherstellen der Funktionsfähigkeit der betreffenden Einheiten eingeleitet werden. Aus diesem Grund sind den Prozessen der Sicherungstechnik höhere Prioritätsstufen zugeordnet als vermittlungstechnischen Prozessen. Bereits ablaufende vermittlungstechnische Prozesse werden durch sicherungstechnische Prozesse unterbrochen.

Aus Sicherheitsgründen sind in einem Kommunikationssystem insbesondere die zentralen Einheiten jeweils doppelt vorhanden. Bei Ausfall einer zentralen Einheit kann somit unverzüglich auf die redundante Einheit umgeschaltet werden, ohne daß dabei ins Gewicht fallende Dynamikverluste entstehen. Dies ist nicht der Fall bei den peripheren Einrichtungen eines Kommunikationssystems. Aufgrund der Vielzahl der peripheren Baugruppen, Schnittstellen zu Endgeräten darstellen, wäre nämlich eine eventuelle Doppelung unwirtschaftlich. Da also die peripheren Einrichtungen nicht doppelt vorhanden sind, müssen diese um so genauer überwacht und ein Totalausfall unverzüglich den zentralen Einheiten mitgeteilt werden. Diese leiten dann ihrerseits sofort Gegenmaßnahmen ein, die darin bestehen, sicherungstechnische Programme/Daten von den an zentralen Einheiten angeschlossenen externen Speichereinheiten zur Peripherie zu übertragen. Damit besteht aber die Gefahr, daß in Zeiten hoher vermittlungstechnischer Auslastung - also in Zeiten, in denen eine Vielzahl von vermittlungstechnischen Prozessen ablaufen und die ihnen zugeteilten Prozessoren und Speichereinheiten bis zur Kapazitätsgrenze belastet sind -, die momentan ablaufenden Prozesse der Vermittlungstechnik von den die Übertragung von Programmen/Daten zur Peripherie realisierenden sicherungstechnischen Prozessen verdrängt werden und somit der zeitliche Ablauf der vermittlungstechnischen Prozesse verzögert wird. Ein Verdrängen der vermittlungstechnischen Prozesse ist jedoch unter allen Umständen zu vermeiden, da dies in der Praxis bedeuten kann, daß neu aufzubauende Verbindungen zwischen zwei Endteilnehmern in einem an der Kapazitätsgrenze arbeitenden System nicht aufgebaut werden können.

Dieses Problem wurde bisher dahingehend gelöst, daß die sicherungstechnischen Prozesse einer sogenannten 'Timersteuerung' unterworfen wurden. Diese bewirkt, daß ein sicherungstechnischer Prozess jeweils nur dann zum Ablauf gelangen kann, wenn ein ihm zugeordneter 'Timer' abgelaufen ist, was in der Regel durch einen 'Timer-Interrupt' gemeldet wird; in diesem Fall werden dann -da die höhere Priorisierung der sicherungstechnischen Prozesse voll zur Geltung kommt - die vermittlungstechnischen Prozesse sofort unterbrochen. Eine derartige Vorgehensweise hat den Vorteil, daß die vermittlungstechnischen Prozesse während des 'Timerlaufs' ungestört ablaufen und erst bei 'Timerablauf' von sicherungstechnischen Prozessen unterbrochen werden können.

Dies ist aber mit dem Nachteil verbunden, daß die Übertragung von Programmen und Daten der Sicherungstechnik zu viel Zeit in Anspruch nimmt, da eine Übertragung nur punktuell - d.h. jeweils beim Ablauf eines 'Timers' - durchgeführt wird; der Forderung nach einzuleitenden Gegenmaßnahmen um ausgefallene Einheiten unverzüglich wieder in Betrieb zu nehmen, kann somit nur bedingt entsprochen werden. Da ferner die eine Übertragung von vermittlungstechnischen/sicherungstechnischen Programmen/Daten durchführenden Prozessen von der zentralen Einheiten gesteuert werden, bedeutet dies in der Praxis eine zusätzliche Belastung zentraler Einheiten.

Der vorliegenden Erfindung liegt die Aufgabe zugrunde, ein Verfahren anzugeben, um Programme und Daten hoher Priorität von zentralen Einheiten zu peripheren Einheiten mit hoher Geschwindigkeit zu übertragen, ohne momentan ab laufende Prozesse niedrigerer Priorität in ihrem Ablauf zu beeinflussen.

Diese Aufgabe wird erfindungsgemäß durch die im kennzeichnenden Teil des Patentanspruchs 1 angegebenen Merkmale gelöst.

Wesentlich für die Erfindung ist, daß zusätzliche Nachrichtenwege sowie diesen zugeordnete Pufferspeicher im Sinne eines Speicherbereichs zwischen der zentralen Einheit und der Peripherie eingerichtet werden; über diese zusätzlichen Nachrichtenwege können dann Programme und Daten mit hoher Priorität übertragen werden. Zu diesem Zweck werden Pufferspeicher in einem Speicher eingerichtet. Die Pufferspeicher sind sowohl von der zentralen Einheit als auch von den peripheren Einheiten zugänglich. Damit können die Programme/Daten hoher Priorität von den zentralen Einheiten in diese Pufferspeicher eingeschrieben und von weniger ausgelasteten Prozessoren der peripheren Einheiten ausgelesen und weiterübertragen werden. Die dafür erforderlichen Steuerungsvorgänge werden über die herkömmlichen Nachrichtenwege durchgeführt.

Vorteilhafte Weiterbildungen der Erfindung sind in den Unteransprüchen angegeben.

Eine besonders vorteilhafte Ausgestaltung der Erfindung ist darin zu sehen, daß zwei zusätzliche Nachrichtenwege mit entsprechend zugeordneten Pufferspeichern eingerichtet werden. Damit ist ein Wechselspiel der Schreib/Lese-Vorgänge und somit eine drastische Erhöhung der Übertragungsgeschwindigkeit verbunden. Dabei wird berücksichtigt, daß zuerst die Programme und anschließend die Daten übertragen werden.

Vorteilhaft ist weiterhin, daß zum einen die vermittlungstechnischen Prozesse in der Regel ungestört von den sicherungstechnischen Prozessen ablaufen und zum anderen im Falle des Gesamtausfalls des Kommunikationssystems die für die Wiederinbetriebnahme verantwortlichen Prozesse sehr viel schneller zur Peripherie übertragen werden, wodurch die Gesamthochlaufzeit für das Kommunikationssystem drastisch verkürzt wird.

Im folgenden wird ein Ausführungsbeispiel der Erfindung anhand der Zeichnung näher erläutert. Dabei zeigen
- FIG 1: eine Blockdarstellung mit einer zentralen Einheit und Peripherieeinheiten, sowie den dazugehörigen Nachrichtenwegen in einem Kommunikationssystem,
- FIG 2: ein Impulsdiagramm der Steuersignale zur Steuerung des Speichers.

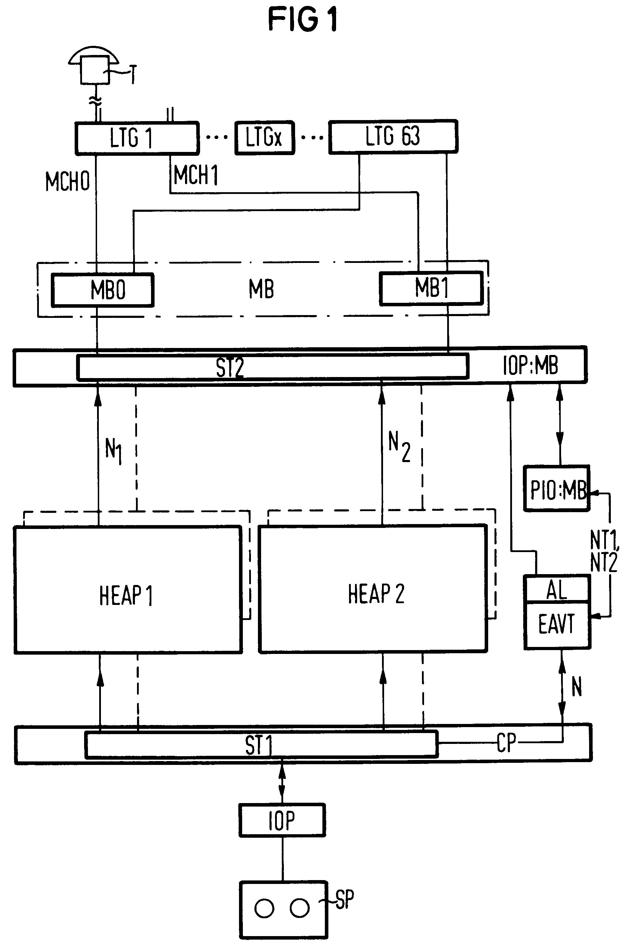

In FIG 1 sind die am Übertragungsvorgang beteiligten Einheiten eines Kommunikationssystems KS aufgezeigt. Zentraler Bestandteil eines Kommunikationssystems KS ist der Koordinationsprozessor CP. Von diesem werden sämtliche Signalisierungs/Durchschaltevorgänge im Kommunikationssystem KS gesteuert und überwacht. Weiterhin sind Peripherieeinheiten LTG1...LTG63, mit daran angeschlossenen Teilnehmerendgeräten T aufgezeigt. Im vorliegenden Ausführungsbeispiel sind insgesamt 63 Peripherieeinheiten LTG1...LTG63 vorhanden. Sie sind über zwei Kanäle MCH0, MCH1 an die Nachrichtenverteilereinheiten MB (MB0, MB1) angeschlossen. Der Koordinationsprozessor CP sowie die Nachrichtenverteilereinheiten MB sind aus Sicherheitsgründen doppelt vorhanden. Die Nachrichtenverteilereinheiten MB sind über die Schnittstelleneinheit IOP:MB an den Koordinationsprozessor CP angeschlossen. Die Kommunikation des Koordinationsprozessors CP mit der Schnittstellenheit IOP:MB und sich den daran anschließenden Periphirieeinheiten LTG1...LTG63 erfolgt mit Hilfe spezieller Programme EAVT, PIO:MB, die in Softwareprozessen zusammengefaßt sind, wobei im Programm EAVT eine Ausgabeliste AL vorhanden ist. Ferner sind am Koordinationsprozessor GP über Schnittstellenelemente IOP externe Speichereinrichtungen SP angeschlossen. In diesem sind unter anderem Programme und Daten der Sicherungstechnik, Vermittlungstechnik sowie Prozeduren zur Berechnung von Gebührendaten oder Gebührendaten an sich abgelegt.

Die Nachrichten der Vermittlungstechnik werden vom Koordinationsprozessor CP über den Nachrichtenweg N zum Prozeß EAVT gesendet. Dort werden die logischen Adressen in physikalische Adressen zur Adressierung der Peripherieeinheiten LTG1... LTG63 umgesetzt. Weiterhin legt der Prozeß EAVT diese Nachrichten und Adressen in der Ausgabeliste AL ab. Von dort greifen die Prozesse der Schnittstelleneinheit IOP:MB auf die Ausgabeliste AL zu und reichen die in der Ausgabeliste AL enthaltenen Nachrichten zu den Nachrichtenverteilereinheiten MB weiter. Diese leiten dann ihrerseits die Nachrichten mit Hilfe der Adressen zu den Peripherieeinheiten LTG1... LTG63 weiter.

Ein Funktionsausfall einer Peripherieeinheit LTGX wird über entsprechende Prozeduren unmittelbar dem Koordinationsprozessor CP mitgeteilt. Dort leiten Steuerprozeduren ST1 unverzüglich Gegenmaßnahmen ein.

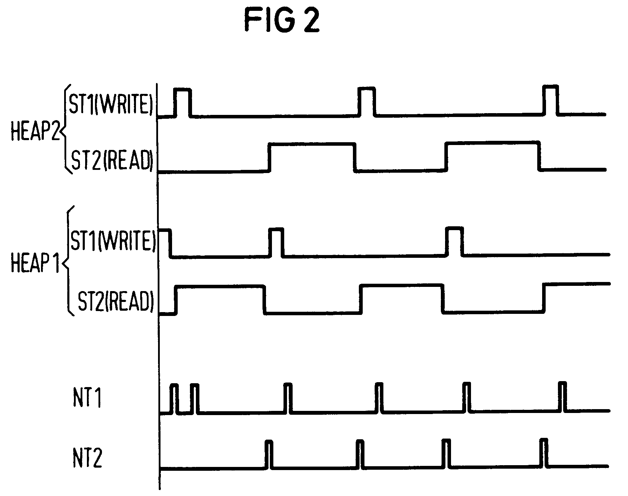

Im Speicher des Koordinationsprozessors CP sind zusätzliche Pufferspeicher HEAP1, HEAP2 mit zwei zusätzlichen Nachrichtenwegen N1, N2 eingerichtet. Dabei wird der Pufferspeicher HEAP1 dem Nachrichtenweg N1 sowie der Pufferspeicher HEAP2 dem Nachrichtenweg N2 zugeordnet. Die Pufferspeicher HEAP1, HEAP2 können sowohl vom Koordinationsprozessor CP als auch von der Schnittstelleneinheit IOP: MB adressiert werden. Soll eine Gegenmaßnahme eingeleitet werden, greifen die Steuerprozeduren auf die auf dem externen Speichereinrichtung SP befindlichen Programme/Daten der Sicherungstechnik zu, formen sie in Datenpakete um und schreiben diese in den Pufferspeicher HEAP1. Gleichzeitig wird eine Nachricht NT1 zur Schnittstelleneinheit IOP:MB über den Nachrichtenweg N gesendet. In dieser Nachricht NT1 sind Informationen über die Adresse des Pufferspeichers HEAP1 über die Größe der zu übertragenden Datenpakete, über die Länge des Nachrichtenkopfes etc. enthalten. Die Nachricht NT1 wird von Steuerprozeduren ST2 der Schnittstelleneinheit IOP:MB aufgenommen und ausgewertet. Die Steuerprozeduren ST2 beginnen daraufhin, die im Pufferspeicher HEAP1 abgespeicherten Datenpakete auszulesen und diese an die zugehörigen Peripherieeinheiten LTG1...LTG63 weiterzuleiten. Zeitgleich beschreiben die Steuerprozeduren ST1 den Pufferspeicher HEAP2 mit weiteren Datenpaketen. Ist das Auslesen des ersten Datenpaketes aus dem Pufferspeicher HEAP1 beendet, erfolgt umgehend eine Nachricht NT2 über den Nachrichtenweg N an die Steuerprozeduren ST1, woraufhin diese den Pufferspeicher HEAP1 mit weiteren Datenpaketen erneut beschreiben. Die von der Schnittstelleneinheit IOP:MB ausgelesenen Datenpakete werden zu den jeweiligen Peripherieeinheiten LTG1...LTG63 weitergeleitet. Die für diesen Schreib/Lesevorgang charakteristischen zeitlichen Zyklen sind anhand der in Fig. 2 dargestellten Steuerimpulsen aufgezeigt. Das zyklische Schreiben und Lesen der Pufferspeicher HEAP1, HEAP2 im Wechsel erfolgt solange, bis alle Datenpakete vom Koordinationsprozessor CP zu den Schnittstelleneinheiten IOP:MB übertragen sind. Dabei wird so verfahren, daß zunächst die Datenpakete der Programme und daran anschließend die Datenpakete der eigentlichen Daten übertragen werden.

Im vorliegenden Ausführungsbeispiel sei im folgenden von einem Totalausfall des Kommunikationssystems KS ausgegangen. In diesem Fall werden Programme/Daten von für diesen Fall vorgesehenen Prozessen über die Pufferspeicher HEAP1, HEAP2 zu den Peripherieeinheiten LTG1...LTG63 übertragen. Insbesondere für den Totalausfall des Kommunikationssystems KS ist vorgesehen, daß das erfindungsgemäße Verfahren mehrfach parallel durchgeführt wird. Dies bedeutet in der Praxis eine drastische Reduzierung der Gesamthochlaufzeit des Kommunikationssystems.

## Patentansprüche

1. Verfahren zum Übertragen von hochprioren Programmen und Daten zwischen einer ersten Funktionseinheit (CP) und einer zweiten Funktionseinheit (IOP:MB) eines Kommunikationssystems (KS), wobei von der ersten Funktionseinheit (CP) Programme und Daten mit unterschiedlicher Priorität über einen ersten Nachrichtenweg (N) zu einem Prozeß (EAVT) gesendet werden, und die zweite Funktionseinheit (IOP:MB) auf eine vom Prozeß (EAVT) zur Adreßermittlung verwalteten Ausgabeliste (AL) zugreift und die Programme und Daten über Nachrichtenverteilereinheiten (MB) zu peripheren Einrichtungen (LTG1...LTG63) weiterleitet,
**dadurch gekennzeichnet,**
daß von ersten, in der ersten Funktionseinheit (CP) ablaufende Steuerprozeduren (ST1) hochpriore Programme und Daten über wenigstens einen zusätzlichen Nachrichtenweg in einen diesem zugeordneten Pufferspeicher eingeschrieben werden und daß anschließend von den ersten Steuerprozeduren (ST1) eine erste Nachricht (NT1) zu zweiten, in der Funktionseinheit (IOP:MB) ablaufenden zweiten Steuerprozeduren (ST2) gesendet wird, die diese dazu veranlaßt, die im Pufferspeicher abgelegten hochprioren Programme und Daten auszulesen und daß anschließend eine zweite als Quittung dienende Nachricht (NT2) von den zweiten Steuerprozeduren (ST2) aus zu den ersten Steuerprozeduren (ST1) gesendet wird.

2. Verfahren nach Anspruch 1,
**dadurch gekennzeichnet,**
daß zwei zusätzliche Nachrichenwege (N1, N2) vorgesehen sind, wobei dem ersten zusätzlichen Nachrichtenweg (N1) ein erster Pufferspeicher (HEAP1) und dem zweiten zusätzlichen Nachrichtenweg (N2) ein zweiter Pufferspeicher (HEAP2) zugewiesen ist, und daß ein Einlesen der zu Datenpakten geformten hochprioren Programme und Daten in den ersten Pufferspeicher (HEAP1) zeitgleich mit dem Auslesen von Datenpaketen aus dem zweiten Pufferspeicher (HEAP2) erfolgt.

3. Verfahren nach Anspruch 1 oder 2,
**dadurch gekennzeichnet,**
daß die erste Nachricht (NT1) und die zweite Nachricht (NT2) über den ersten Nachrichtenweg (N) gesendet werden.
